# EUROPEAN PATENT SPECIFICATION

(11) **EP 3 158 129 B1**
(45) Date of publication and mention of the grant of the patent: **06.02.2019**
(21) Application number: 15810599.9
(22) Date of filing: 15.06.2015
(51) Int. Cl.: D21C 9/147, C08B 15/00, C08B 16/00, D21C 1/04, D21C 9/16

(54) **METHOD OF PRODUCING DISSOLVING PULP FROM LIGNOCELLULOSIC MATERIAL**
VERFAHREN ZUR HERSTELLUNG VON LÖSLICHEM ZELLSTOFF AUS LIGNOCELLULOSEMATERIAL
PROCÉDÉ DE PRODUCTION DE PÂTE DISSOLVANTE À PARTIR D'UN MATÉRIAU LIGNOCELLULOSIQUE

(30) Priority: 17.06.2014 SE 1450753
(43) Date of publication of application: 26.04.2017
(73) Proprietor: Valmet AB, 851 94 Sundsvall (SE)
(72) Inventor: DAHLLÖF, Håkan, S-653 49 Karlstad (SE); ANTONSSON, Stefan, S-117 58 Stockholm (SE); WENNERSTRÖM, Maria, S-854 61 Sundsvall (SE); LAMMI, Lari, FI-282 20 Pori (FI); SJÖDIN, Lars, S-852 31 Sundsvall (SE)
(74) Representative: Saitton, Hanna Johanna
(86) International application number: PCT/SE2015/050687
(87) International publication number: WO 2015/195030

(56) References cited:
- WO-A1-97/39179
- WO-A1-99/47733
- WO-A2-01/88236
- US-A- 3 865 685
- US-A- 4 427 490
- US-A- 5 145 557
- JAKSIC, B. ET AL.: 'Oxygen-based Bleaching of Dissolving Pulp' 84TH ANNUAL MEETING, TECHNICAL SECTION CPPA 27 January 1998, MONTREAL, CANADA, pages 397 - 401
- SIXTA, H.: 'Handbook of Pulp' vol. 2, 2006, pages 701 - 708, 1022, XP055375253
- KORDSACHIA, O. ET AL.: 'Production of Spruce Dissolving Pulp with the Prehydrolysis-Alkaline Sulfite Process (PH-ASA)' LENZINGER BERICHTE vol. 83, 2004, pages 30 - 33, XP055245119
- HASSAN, E-B M.: 'Oxygen-peroxide (Eop) Delignification and Peroxide (P) Bleaching of Bagasse Kraft Pulp' JOURNAL OF SCIENTIFIC & INDUSTRIAL RESEARCH vol. 62, July 2003, XP055245121
- BELASHEVA, T. P. ET AL.: 'Low-viscosity Cellulose for Viscose Rayon and Cellophane' FIBRE CHEMISTRY vol. 5, March 1973, ISSN 1573-8493 XP055245125

## Description

The present disclosure relates in general to a method for producing dissolving pulp of low viscosity from lignocellulosic material. The dissolving process for producing low viscosity pulp conventionally contains a first hydrolysis stage followed by a kraft cooking stage and thereafter an oxygen delignification stage further reducing the lignin content before final bleaching.

### BACKGROUND

In the wood based pulping industry significant efforts have been made designing different processes for different grades of pulp.

In conventional kraft pulping the objectives has been to produce a pulp grade with high yield and high pulp strength having acceptable brightness level and stability. For fully bleached pulp grades ISO brightness above 88% is most often preferred, and if minimal brightness reversion is requested the residual content of lignin and hexenuronic acid must be kept low.

In recent years the pulping industry has strived to find alternative products for the wood material as the printing paper market declines in volume, and that new products may be found with better profit margins.

Dissolving pulp has emerged as a reborn alternative growing market for pulp mills and much attention has been given to modify the pulping processes to be able to produce different grades of dissolving pulp which is used to produce a multitude of products like Rayon-grade pulp or specialty pulps. The interest to find alternative textile materials to cotton has increased due to short term shortage and increase in costs for cotton and an increased competition in long term for land to grove an increasing demand of cotton on. Dissolving pulp can consist of cotton linters, pulp originating from wood or annual plants made by the sulfite process or the prehydrolysis kraft process. However, in pulp industry dissolving pulp is generally referred to as a bleached pulp produced from wood that has a high alpha cellulose content, typically over 92%, and only small content of hemicelluloses, typically below 10%. Hence, the wood yield of dissolving pulp from the process is typically low at about 35-40%. Dissolving pulp is used to manufacture various cellulose-derived products such as rayon yarn for use in e.g textile industry and specialty chemicals and materials such as cellulose acetate and carboxy methyl cellulose. When making rayon yarns the dissolving pulp is converted to cellulose xanthate which dissolves in caustic soda and the resulting viscous liquid is extruded in acidic baths to yield fibers. As an alternative process the dissolving pulp can be dissolved in ionic solvents to make extruding to fibers possible. For both these processes and the specific final product it is essential that the viscosity of the dissolving pulp is both low and within a specific range suitable for the process, in order to run derivatisation/dissolution process smoothly..
For some dissolving pulps grades the required intrinsic viscosity in the finally bleached dissolving pulp must be as low as 350 ml/g and within a narrow acceptance range of only ±20 ml/g. This requires a low viscosity already after cooking or possibilities to lower the viscosity in a controlled manner and to a greater extent in subsequent delignification and/or bleaching stages.

Throughout this description, viscosity is used as the dominant pulp property for dissolving pulp. The viscosity number is expressed as intrinsic viscosity and measured in ml/g. A standard test method for intrinsic viscosity of cellulose could be found in ISO-standard ISO 5351.

Now, viscosity measurements is indicative for the average molecular weight of the cellulose polymers, i.e. the length of the cellulose chains. The length of the cellulose chains impact the derivatisation and solubilisation process as well as the characteristics of the final product.

Peroxide has been considered as reinforcing chemical in oxygen delignification after conventional kraft pulping. Several proposals has been published but all of them use small charges of peroxide at about 0.5 % on pulp, i.e. 5 kg/odt, improving both delignification and giving a higher pulp viscosity at a certain kappa number compared to if no peroxide was used.
In EP 866895 it is disclosed an improved 2-stage oxygen delignification process where peroxide is only added to the last stage. The charge used is 0.5%. However, selective charge of peroxide to first or second and even both oxygen delignification stages had already been elaborated by the group of researchers V.R.Parthasarathy, R. Klein, V.S.M Sundaram, H.Jameel and J.S.Gratzl in an article "Hydrogen-peroxide-reinforced oxygen delignification of southern pine kraft pulp and short sequence bleaching", published in July 1990 Tappi Journal, pp. 177-187. They proved that O-PO, PO-O and PO-PO pulps exhibit better pulp strength than the O-O pulps, and when peroxide is added to both stages, i.e. the PO-PO sequence, the pulp exhibited the best strength properties. As stated in this article was a kappa reduction and preservation of viscosity expected, if an addition of peroxide was less than 0.5%. However at higher charges of peroxide the viscosity became lower than in the O-O sequence without peroxide charge and hence was not recommended.
The criteria for optimizing the pulp delignification and bleaching process are, however, not the same for conventional kraft pulp aimed to be used in paper, board and tissue grades as for dissolving pulp. The latter often needs to be treated in such a way that a low viscosity is obtained whereas for conventional kraft pulp the viscosity needs to be preserved as much as possible in order to obtain high pulp strength.
The viscosity in pulp aimed to be used in paper, board and tissue grades produced in a conventional kraft pulp process is about 1200-1400 ml/g after the cook and around 700 ml/g after final bleaching.

However, for dissolving pulp the viscosity is often about or below 900 ml/g after cook or at least below 800 ml/g after prebleaching, i.e. oxygen delignification or other pre bleaching stages (where kappa and viscosity reduction is an objective over increase in brightness) and below 600 ml/g after final bleaching. Most often the viscosity target for the final dissolving pulp is kept within a relatively narrow range, for example within 450-500 ml/g.

The problem with production of dissolving pulp is to reach the low viscosity of the final pulp requested and most often is extended and intensified cooking, i.e. both longer cooking time and tougher cooking conditions as of alkali charge and temperature, needed in order to obtain a low enough viscosity after the cook.

A problem with extended cooking occurs if it is desired to increase the production in existing pulp mills as increased production results in decreased cooking time if the equipment is the same. This results in higher viscosity when the throughput of the lignocellulosic material increases.
If the viscosity reduction does not reach a sufficient low level directly after the cook, as is the case if the production is increased, it has with some standard bleaching sequences been found to be almost impossible to reach the final viscosity level by implementing tougher process conditions in final bleaching. Normally the viscosity reduction may be increased marginally in the order of 50 ml/g in final bleaching, by implementing tougher bleaching conditions in the final bleaching stages as of temperature and additional bleaching agents or increased charge of the standard bleaching agents used.. Ozone stages are also capable of reducing viscosity to a larger extent, but this at expense of increased costs, especially in an existing bleaching plant.
When using a final bleaching sequence containing a D₀-EP-D₁-P it has shown to be practically impossible to reach the viscosity target by intensifying the conditions in the D₀-EP-D₁-P sequence in order to compensate the loss in viscosity reduction in the cook at increased production rate. Especially the D-stages do not respond
with greater viscosity reduction at tougher conditions. This is especially significant in bleaching lines where the bleaching stages are designed for lower temperatures below 100°C and thus may not designed as pressure vessels, which totally prevents an operator to increase temperature above 90-100°C. Hence the possibilities to increase the production of dissolving pulp in an existing pulp mill without significant modifications of cooking and bleaching plant have been considered very difficult. WO99/47733 describes a method for producing low viscosity dissolving pulp.

### SUMMARY

The main objective problem with the present invention is to enable increased production of dissolving pulp in existing pulp mills while still being able to reach the lower viscosity requested in finally bleached dissolving pulp, and being able to control this low viscosity within a narrow range suitable for the final dissolving pulp grade.

The secondary objective problem with the present invention is to enable increased production of dissolving pulp in existing pulp mills where the compensatory control of loss in viscosity reduction after cooking could be implemented by changing operational conditions in the oxygen delignification.

The problem to be solved is therefore to find an alternative way of reducing viscosity in oxygen stages than what is possible to do with only intensified conditions as of alkali, oxygen and temperature. An additional reduction of viscosity must be able to be obtained which may reduce charges of oxygen, alkali and steam to reasonable and practical levels, while still enabling a large control span with a viscosity reduction range that could compensate for increases in viscosity fed to oxygen stages as a result of e.g. production increases.

The operating conditions of the oxygen stage relates to charges of oxygen and alkali, temperature, pulp consistency and pressure. Oxygen is a relatively inexpensive bleaching agent, and alkali is also available at reasonable costs in kraft or soda mills with a chemical recovery system.

The invention is based upon the assumption that larger viscosity reductions may be implemented in the oxygen stage if agents with strong chain cleavage abilities located close to or neighboring to cellulose are increased. This can be achieved by e.g. an increase in hydroxyl radical formation. It is fairly known in the pulping industry that the formation of hydroxyl radicals during oxidation are reducing pulp viscosity but no prior art has tried to increase this effect in order to control the viscosity of pulp in general, and especially not in dissolving pulp production.

In the most general approach the invention relates to a method for producing low viscosity dissolving pulp from lignocellulosic material, said dissolving process comprising a first acidic hydrolysis process followed by a kraft cooking process reaching a kappa number in the washed cooked pulp below 30, said cooked and washed pulp subsequently further delignified in at least one oxygen delignification stage and finally bleached in at least one bleaching stage, and wherein the final target viscosity of the bleached dissolving pulp is primarily controlled by adjusting the conditions of the oxygen stage using temperature, alkali charge and oxygen charge obtaining a basic reduction of viscosity in said oxygen stage in the range of 50-300 ml/g by said adjustment of temperature and charge of alkali and oxygen, said oxygen stage being further reinforced by a charge of at least one additional oxidation agent in order to obtain an additional reduction of viscosity in said oxygen stage in the range of 50-100 ml/g further at least.
It has surprisingly been found that the oxygen stage is possible to adjust whereby a large range of viscosity reduction could be obtained by regulatory control of the oxygen stage alone. Hence, the total production may be increased in any existing mills, which increased production is compensated by increased viscosity reduction in the oxygen stage.

In a specific embodiment is the additional oxidation agent peroxide, which in combination with temperature and alkali charge has shown to boost the viscosity reduction in the oxygen stage considerably and most surprisingly almost double the viscosity reduction by said charge of peroxide compared to the viscosity reduction obtained by adjusting temperature and charge of alkali and oxygen to optimum viscosity reduction.

More specifically the dissolving process comprising following steps in sequence;
a) subjecting comminuted cellulosic material for an acidic hydrolysis process wherein at least 20% of the original hemicellulose content of the lignocellulosic material is degraded in the hydrolysis process,
b) subjecting the hydrolysed lignocellulosic material to a kraft cook obtaining a cooked pulp
c) subjecting the cooked pulp to an oxygen delignification, wherein the conditions of the oxygen delignification is as follows
   c1) a retention time of at least 40 minutes, preferably 60 minutes and at the most 180 minutes in said oxygen delignification;
   c2) an initial temperature established equal to or above 90° C, and 140° C at the most;
   c3) a high alkali charge equal to or above 20 kg/odt resulting in a final pH at or above 12.0;
   c4) said alkali charged in form of sodium hydroxide or at least partially oxidized white liquor where at least more than 50% of the sulfur containing ions in the white liquor have been oxidized to thiosulfate at least;
   c5) a total oxygen charge equal to or above 20 kg/ODMT
   c6) a peroxide charge equal to or above 2 kg/BDMT, preferably 3 kg/odt and more preferably 6 kg/odt, and up to 10 kg/odt at the most;
   c7) a pressure exceeding 3 bar(g) established during the entire oxygen delignification, preferably between 5-10 bar(g), and at the most a pressure of 15 bar(g);
   c8) said conditions resulting in a viscosity reduction of at least 20% of the cooked pulp and preferably at least 40% of the cooked pulp,
d) subjecting the oxygen delignified pulp for final bleaching in at least 2 bleaching stages obtaining a final dissolving pulp after the last bleaching stage.

The cooking process according to the inventive method could equally well take place in a batch digester or a continuous digester. If the production is increased in an existing batch digester the cooking time needs to be reduced so that each batch digester may be emptied more frequently. If the production is increased in an existing continuous digester is normally the retention time in the digester reduced and thereby is the viscosity reduction decreased. The reduced retention time in batch or continuous digesters may in part be compensated by increasing the temperature, but this at high costs as this requires addition of steam capable of increasing the temperature at the normal cooking temperature at about 140-170°C.

In an alternative embodiment of the inventive method could the oxygen delignification takes place in at least 2 successive treatment vessels with at least one mixing position between said vessels, where at least one part of the charge of oxygen, alkali or peroxide is added to the mixing position between vessels. By such embodiment could the conditions throughout until the very end of the oxygen delignification stage be kept at optimal conditions for a maximum reduction of the viscosity.

In yet an alternative embodiment of the inventive method could the treatment liquid after step a) be replaced by new treatment liquid for step b), preferably by a displacement process, thus producing a displaced hydrolysate liquid from step a) containing dissolved hemicellulose.

In a further alternative embodiment of the inventive method is the cooked cellulosic material washed before the oxygen delignification stage, and that the cooked and washed cellulosic material is suspended in a new treatment liquid ahead of oxygen delignification.

Finally, in an alternative detailed embodiment of the inventive method are the conditions of the oxygen delignification stage used as a primary control for the final viscosity of the dissolving pulp, enabling viscosity modifications in the range of 100-200 ml/g over the oxygen delignification stage.

### BREIF DESCRIPTION OF THE DRAWINGS

- Figure 1: Show a principle complete fiberline for manufacturing dissolving pulp;
- Figure 2: show the first stages of the fiberline in figure 1;
- Figure 3: show the cooking and oxygen delignification stage in figure 1 and 2;
- Figure 4: show an alternative to figure 3 with two-stage oxygen delignification;
- Figure 5: - No figure 5 included
- Figure 6,: show the typical development of viscosity reduction obtained in a standard kraft fiberline and in a standard prehydrolysis dissolving fiberline;
- Figure 7,: show what happens with the viscosity reduction when the production rate is increased;
- Figure 8;: show the objective with present invention, i.e. to recover the viscosity reduction in the Oxygen stage (dotted line)
- Figure 9;: show the first order of viscosity reduction possible using alternative charges of oxygen, alkali and temperature,
- Figure 10;: show the second order of viscosity reduction possible, 2^{nd} and 4^{th} curve from top, compared to the first order of viscosity reduction possible, 1^{st} and 3^{rd} curve from top using only alkali, oxygen and temperature;
- Figure 11,: show a detail view of figure 10.

### DETAILED DESCRIPTION

The process will be further described with reference to the accompanying drawings. It should however be noted that the invention is not limited to the embodiments described below and shown in the drawings, but may be modified within the scope of the appended claims.

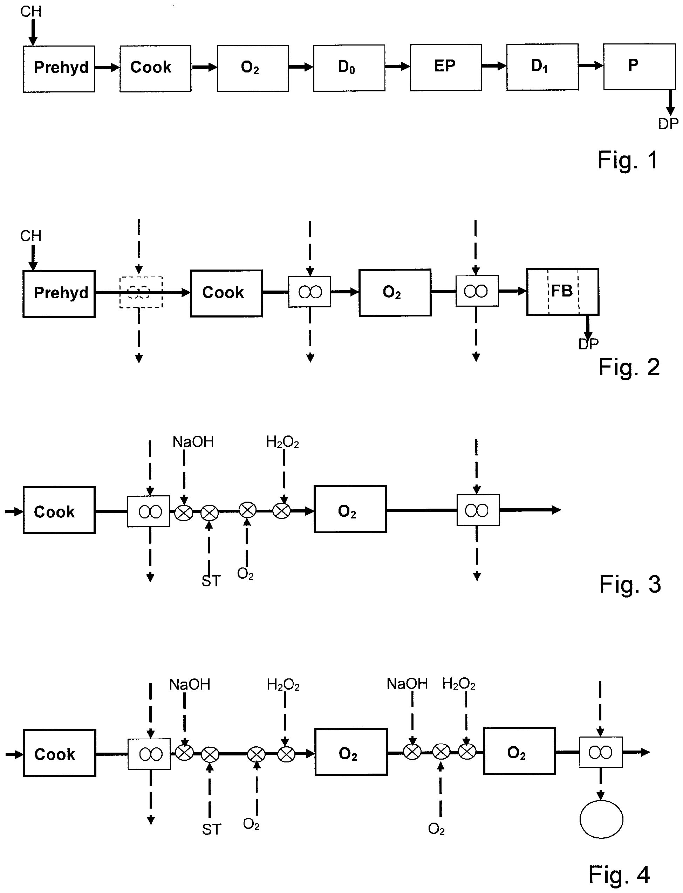

The invention is related to a method for producing low viscosity dissolving pulp from lignocellulosic material, said dissolving process comprising a first acidic hydrolysis process followed by a kraft cooking process reaching a kappa number in the washed cooked pulp below 30, said cooked and washed pulp subsequently further delignified in at least an oxygen delignification stage and finally bleached in at least one bleaching stage. The principle layout of such a dissolving process is shown in figure 1. Lignocellulosic material, preferably wood chips (CH), are fed to a first hydrolysis stage (Prehyd), followed by a kraft cooking stage (Cook), and thereafter oxygen delignification (O₂), before final bleaching in a first chlorine dioxide bleaching stage, (D₀) an extraction stage, (EP), a second chlorine dioxide bleaching stage, (D₁), and finally a peroxide stage, (P) from which the dissolving pulp is fed out. The first stage Prehyd+Cook+O₂ are more or less standard stages but the final bleaching stages could have other configurations than the D₀-EP-D₁-P sequence.
Such alternative configurations could be; Z-D-EP-D or Z-D-P or D₀-EP-D₁-D₂ or A-D-EP-D. Typically the first stage following oxygen delignification is an acidic stage (A, D or Z) followed by alkaline extraction (E, EP, EOP) and an acidic bleaching stage (D) before an optional alkaline bleaching stage (such as P stage).

In figure 2 are the first stages Prehyd-Cook-O₂ shown in more detail before the final bleaching FB, with washing stages shown between and after Prehyd-Cook-O2.
In figure 3 is the Cook-O2 stages shown in more detail, using one stage oxygen delignification stage, with mixing positions indicated for charge of alkali (NaOH), Steam (ST), oxygen (O₂), as well as a mixing position for peroxide (H₂O₂) used in the present invention. The charges are not necessarily made with individual mixers for each charge, and additional points of different media can be done in another order. Figure 4 show in principle the same as figure 3, but with a 2-stage oxygen delignification with the option to mix alkali, oxygen and peroxide also to the second stage.

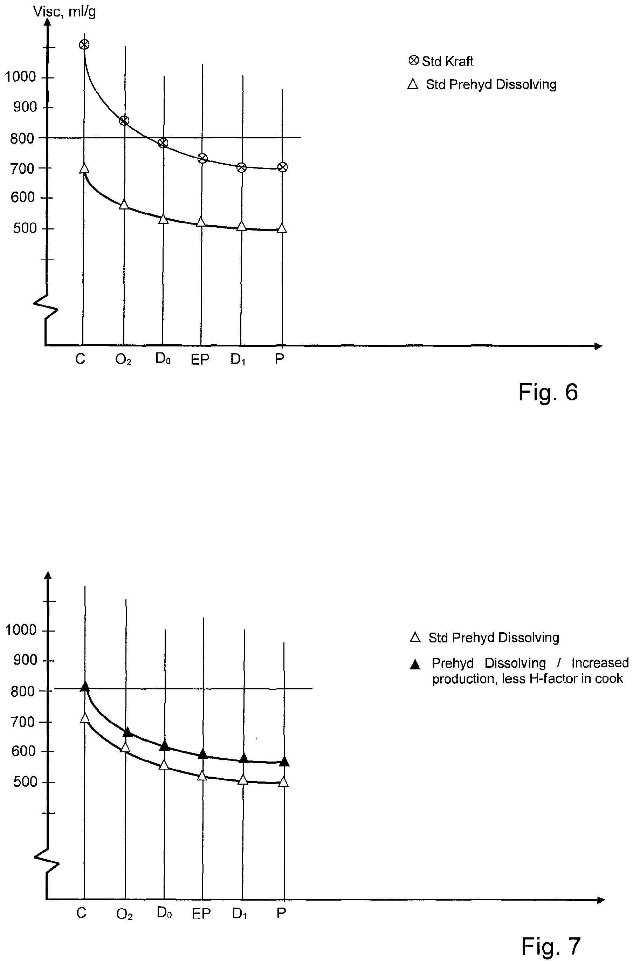

In figure 6 is compared the viscosity reduction through the entire process using a standard kraft cooking process, the upper curve, and a standard prehydrolysis-kraft process, the lower curve. Typically the viscosity after the cook in the standard kraft process is above 1100 ml/g and the viscosity after final bleaching is about 700 ml/g. On the other hand the viscosity after the cook in the standard prehydrolysis-kraft process is about 700 ml/g and the viscosity after final bleaching is lower than 500 ml/g. There is obviously a large deviation from these curves between different mills, but the principle differences between the processes applies.

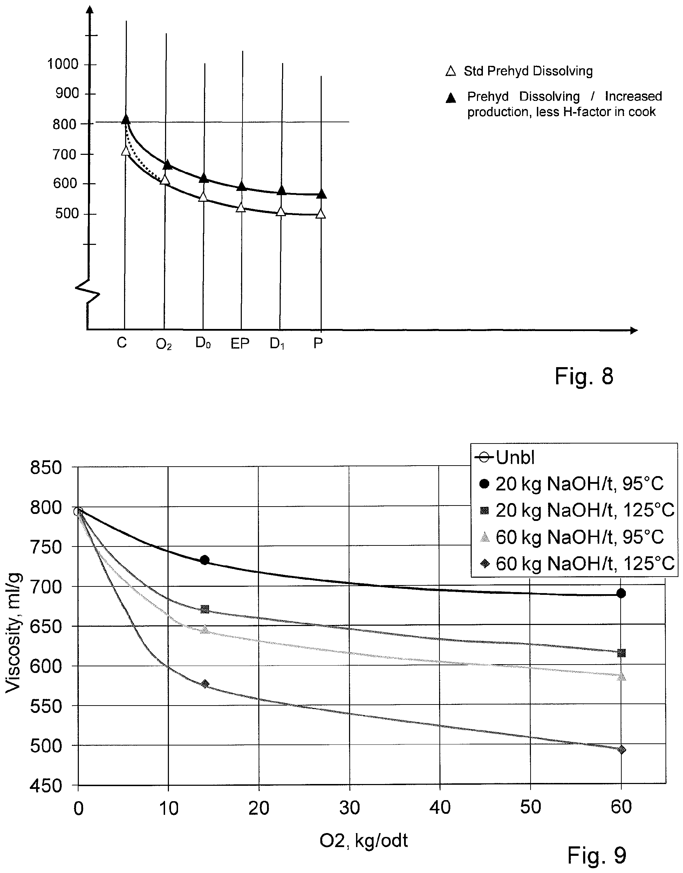

In figure 7 is shown what happens during a production increase in a prehydrolysis-kraft process as of viscosity reduction. The viscosity after the cook could be increased by at least 100 ml/g, and this reduction in viscosity reduction could not be compensated for by implementing tougher conditions in the final bleaching stages. What the invention is all about is shown in figure 8, where the loss in reduced viscosity from cooking instead would be fully compensated for by increased viscosity reduction during the oxygen stage (the compensatory effect shown in dotted curve).

### EXPRIMENTAL DATA FROM ALTERING CONDITIONS IN OXYGEN STAGE

In order to study the potential viscosity reduction in the oxygen stage was the conventional charges of oxygen, alkali and temperature altered.
The pulp studied was a hardwood (Brazilian Eucalyptus) pulp which after hydrolysis and cook had a kappa number of 7.3, an intrinsic viscosity of 795 ml/g and an ISO brightness of 43.4 %.

The pulp samples were oxygen delignified in autoclaves and the oxygen charge was controlled with an inert gas (nitrogen) at following conditions;

| | |
|---|---|
| Pulp consistency, % | 12 |
| Temperature, °C | 95 / 125 |
| NaOH, kg/odt | 20 / 60 |
| O2, kg/odt | 14/60 |
| Time, min | 60 |
| Pressure, MPa | 0,8 |

The tests were done with increasing O₂ charge in the autoclave, up to an amount of 60 kg/odt, which is an extreme level in mill scale. Oxygen charges in mill scale mixers is normally not over 15-25 kg of O₂/odt as there are practical limitations of oxygen quantities in mill scale applications . In laboratory scale autoclaves the high charge of oxygen is on the contrary easy to implement as the pulp sample is small in comparison to the total gas filled volume of the autoclave. However, the tests demonstrates the maximum effect of oxygen charge.
The results from these tests are plotted in figure 9.

### Results from 95°C tests

What can be seen in the first curve from the top is that the viscosity reduction may be reduced from 795 down to 730, i.e. dropping only 65 ml/g or about 8%, using a moderate charge of alkali, i.e. 20 kg/odt of NaOH at a temperature of 95°C and a moderate charge of oxygen at 14 kg/odt. Increasing the charge of oxygen to an extreme amount of 60 kg/odt made an improvement from 730 down to 680.

What can be seen in the third curve from the top is that the viscosity reduction may be reduced from 795 down to 650, i.e. dropping 145 ml/g or about 18%, using an extreme high charge of alkali, i.e. 60 kg/odt of NaOH at a temperature of 95°C and a moderate charge of oxygen at 14 kg/odt. This operating point is most often the practical upper limit in atmospheric vessels even if alkali charges are extreme. Increasing the charge of oxygen to an extreme amount of 60 kg/odt made a further viscosity reduction from 650 down to 580. But as stated previously, such high charges of oxygen are difficult to make benefit of in mill scale.

### Results from 125°C tests

The tests where further elaborated at 125°C, with following results;

| | | | | |
|---|---|---|---|---|
| O2, kg/odt | 14 | 14 | 60 | 60 |
| NaOH, kg/odt | 20 | 60 | 20 | 60 |
| Pressure, MPa* | 0.8 | 0.8 | 0.8 | 0.8 |
| Final pH | 12.0 | 12.7 | 11.2 | 12.7 |
| Kappa number | 3.2 | 3.4 | 2.4 | 2.3 |
| Viscosity, ml/g | 672 | 578 | 615 | 493 |
| ISO Brightness, % | 60.3 | 60.5 | 67.0 | 70.1 |

| | | | | |
|---|---|---|---|---|
| *= pressurized with inert N₂ and O₂ to control amount of oxygen | | | | |

What can be seen in the second curve from the top is that the viscosity reduction may be reduced from 795 down to 672, i.e. dropping 123 ml/g or about 15%, using a moderate charge of alkali, i.e. 20 kg/odt of NaOH at temperature of 125°C and a moderate charge of oxygen at 14 kg/odt. Increasing the charge of oxygen to an extreme amount of 60 kg/odt made an improvement from 672 down to 615.

What can be seen in the fourth curve from the top is that the viscosity reduction may be reduced from 795 down to 615, i.e. dropping 180 ml/g or about 22%, using an extreme high charge of alkali, i.e. 60 kg/odt of NaOH at a temperature of 125°C and a moderate charge of oxygen at 14 kg/odt. Increasing the charge of oxygen to an extreme amount of 60 kg/odt made a further viscosity reduction of 122 ml/g from 615 down to 493. But as stated previously, such high charges of oxygen are very difficult to mix evenly into the pulp flow.

The tests showed that highest viscosity reduction may be obtained if the temperature was increased to 125°C, and a viscosity reduction may be obtained from 795 down to about 493, i.e. dropping 302 ml/g or about 37%, using 60 kg/odt of NaOH and an extreme charge of oxygen at 60 kg/odt. However, as indicated before, such high charges of oxygen and alkali are difficult to make benefit of in mill scale.

The tests show that a viscosity reduction may be obtained in an oxygen stage using the parameters temperature, alkali charge and oxygen charge, and that the lowest viscosity was reached with highest charges of alkali and oxygen and at the highest temperature.

The problem is that practical reasons and costs will limit the possibility to control the viscosity to the target level and additional means to further reduce the viscosity are required.

### EXPRIMENTAL DATA FROM PEROXIDE CHARGE

In order to study the potential viscosity reduction in the oxygen stage was the conventional charges of oxygen, alkali and temperature complemented with relatively modest charges of peroxide at 3 and 6 kg/odt. The same pulp was used, i.e. a hardwood (Brazilian Eucalyptus) pulp which after hydrolysis and cook had a kappa number of 7.3, an intrinsic viscosity of 795 ml/g and an ISO brightness of 43.4 %.

While it is well known in the pulping area that small charges of peroxide in this order is added to oxygen stages in order to improve selectivity, i.e. increase delignification at maintained or even improved viscosity, we started with the assumption that further viscosity reduction may be obtained if the number of oxidation processes increases which would increase the amount of hydroxyl radicals formed. Hydroxyl radicals are an intermediate reaction product in oxidation processes which is very short lived, but is detrimental for pulp strength, i.e. viscosity. The effect of hydroxyl radicals is a well-known effect and some patent applications has even tried to reduce the impact of such hydroxyl radicals on the pulp, and thus losses in pulp strength, by oxidation of the filtrate before being added to the pulp suspensions (se for example US 6.733.625).

In order to compare the effect of peroxide charge per se, was a number of tests performed at 95°C.
Test Series 1 was made to establish a reference using only alkali, oxygen and temperature as parameters lowering the viscosity, i.e. a basic viscosity reduction.

Test Series 2 was made to establish the additional viscosity reduction possible by adding an amount of 3 or 6 kg/odt of peroxide, with a modest alkali charge of 20 kg/odt, and
Test Series 3 was made to establish the additional viscosity reduction possible by adding an amount of 3 or 6 kg/odt of peroxide, with a higher alkali charge of 60 kg/odt.

**Test Series 1 (O without peroxide charge)**

| **O₂, kg/odt** | **60** | **60** | **14** | **14** |
|---|---|---|---|---|
| NaOH, kg/odt | 20 | 60 | 20 | 60 |
| Pressure, MPa* | 0.8 | 0.8 | 0.8 | 0.8 |
| Final pH | 12.4 | 12.8 | 12.5 | 12.9 |
| Kappa number | 3.9 | 3.8 | 5.5 | 5.2 |
| Viscosity, ml/g | 690 | 586 | 734 | 647 |
| ISO Brightness, % | 57.7 | 59.3 | 52.0 | 53.5 |
| COD, kg/odt | 15.2 | 17.2 | 17.3 | 17.4 |

**Test Series 2 (O with 3 or 6 kg/odt peroxide charge at 20 kg/odt NaOH)**

| **O₂, kg/odt** | **30** | **250** | **30** | **250** |
|---|---|---|---|---|
| NaOH, kg/odt | 20 | 20 | 20 | 20 |
| Peroxide, kg/odt | 3 | 3 | 6 | 6 |
| Pressure, MPa* | 0.8 | 0.8 | 0.8 | 0.8 |
| Final pH | 12.3 | 12.2 | 12.3 | 12.2 |
| Kappa number | 4.0 | 2.9 | 3.6 | 2.7 |
| Viscosity, ml/g | 665 | 640 | 638 | 622 |
| ISO Brightness, % | 61.3 | 68.2 | 65.4 | 71.4 |
| COD, kg/odt | 14.3 | 17.6 | 15.2 | 18.0 |

**Test Series 3 (O with 3 or 6 kg/odt peroxide charge at 60 kg/odt NaOH)**

| **O₂, kg/odt** | **30** | **250** | **30** | **250** |
|---|---|---|---|---|
| NaOH, kg/odt | 60 | 60 | 60 | 60 |
| Peroxide, kg/odt | 3 | 3 | 6 | 6 |
| Pressure, MPa* | 0.8 | 0.8 | 0.8 | 0.8 |
| Final pH | 12.8 | 12.8 | 12.8 | 12.8 |
| Kappa number | 3.7 | 2.6 | 3.3 | 2.3 |
| Viscosity, ml/g | 514 | 526 | 491 | 504 |
| ISO Brightness, % | 63.4 | 71.2 | 68.3 | 75.3 |
| COD, kg/odt | 21.5 | 18.3 | 22.9 | 18.9 |

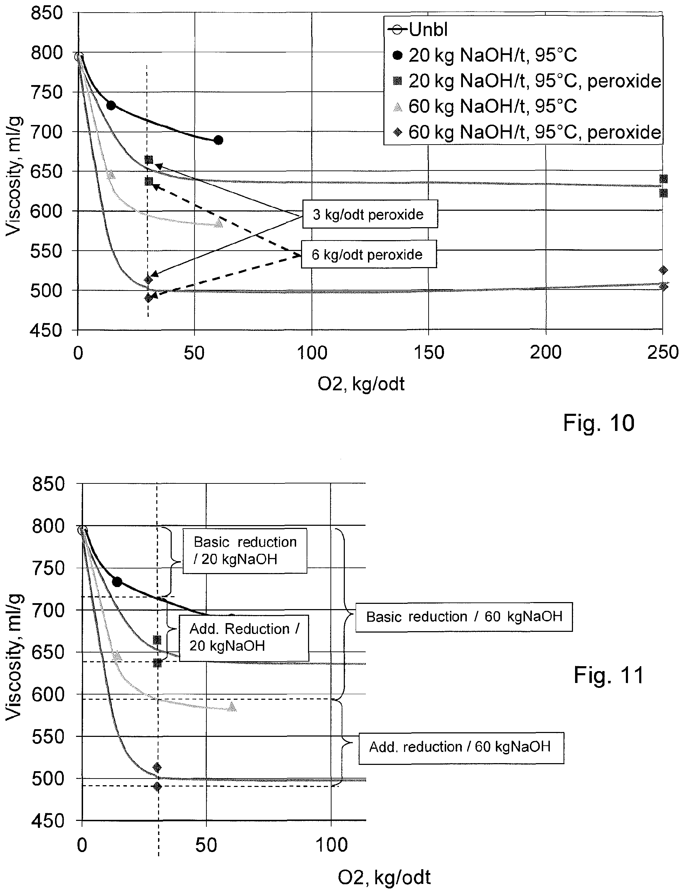

The results from test series 1-3 is plotted in figure 10. A detail view of figure 10 is shown in figure 11.
A first conclusion to be made from the peroxide test is that the charge of oxygen does not seem to have any major impact above 50 kg/odt.

The uppermost curve and the second uppermost curve both with modest charge of alkali exhibit a surprisingly additional viscosity reduction.

A basic viscosity reduction using only alkali, oxygen (30kg/odt) and temperature reaches about 75 ml/g or >9%, while with a 3 kg/odt charge of peroxide reach an additional viscosity reduction of about 55 ml/g or 7%. This surprising result show that in this example could almost the same order of viscosity reduction be obtained with a small additional charge of peroxide, compared with the viscosity reduction obtained using alkali, oxygen and temperature only. Further, with a modest increase of peroxide charge to 6 kg/odt an additional viscosity reduction is about 82 ml/g or >10%.

The second lowermost curve and the lowermost curve both with high charge of alkali exhibit as well a surprisingly additional viscosity reduction.

The basic viscosity reduction using only alkali, oxygen (30kg/odt) and temperature reaches about 205 ml/g or >25%, while with a 3 kg/odt charge of peroxide reach an additional viscosity reduction of about76 ml/g or >9%. This surprising result show that in this example with extreme charge of alkali could

This result show the surprising finding that a small amount of peroxide could be used as an effective additive to control the viscosity of the pulp. This is in total contrast to the findings of previous publications investigating paper grade bleaching indicating that charges below 5 kg(odt (< 5%) improved pulp strength.

While the present invention defines the viscosity as measured in intrinsic viscosity (ml/g), other viscosity measurements are of course also applicable.

## Claims

1. A method for producing low viscosity dissolving pulp from lignocellulosic material, said dissolving process comprising a first acidic hydrolysis process followed by a kraft cooking process reaching a kappa number in the washed cooked pulp below 30, said cooked and washed pulp subsequently further delignified in at least an oxygen delignification stage and finally bleached in at least one bleaching stage, and wherein the final target viscosity of the bleached dissolving pulp is primarily controlled by adjusting the conditions of the oxygen stage using temperature, alkali charge and oxygen charge obtaining a basic viscosity reduction in said oxygen stage in the range of 50-300 ml/g by said adjustment of temperature and charge of alkali and oxygen, said oxygen stage being further reinforced by a charge of at least one additional oxidation agent in order to obtain an additional viscosity reduction in said oxygen stage in the range of an additional 50-100 ml/g at least.

2. Method according to claim 1 wherein the additional oxidation agent is hydrogen peroxide.

3. Method according to claim 2, said dissolving process comprising following steps in sequence;
a) subjecting comminuted cellulosic material for an acidic hydrolysis process wherein at least 20% of the original hemicellulose content of the lignocellulosic material is degraded in the hydrolysis process,
b) subjecting the hydrolysed lignocellulosic material to a kraft cook obtaining a cooked pulp,
c) subjecting the cooked pulp to an oxygen delignification, wherein the conditions of the oxygen delignification is as follows
c1) a retention time of at least 40 minutes, preferably 60 minutes and at the most 180 minutes in said oxygen delignification;
c2) an initial temperature established equal to or above 90° C, and 140° C at the most;
c3) an alkali charge equal to or above 20 kg/odt resulting in a final pH at or above 12.0;
c4) said alkali charged in form of sodium hydroxide or at least partially oxidized white liquor where at least more than 50% of the sulfur containing ions in the white liquor have been oxidized to thiosulfate at least;
c5) a total oxygen charge equal to or above 20 kg/ODMT
c6) a peroxide charge equal to or above 2 kg/BDMT, preferably 3 kg/odt and more preferably 6 kg/odt, and up to 10 kg/odt at the most;
c7) a pressure exceeding 3 bar(g) established during the entire oxygen delignification, preferably between 5-10 bar(g), and at the most a pressure of 15 bar(g);
c8) said conditions resulting in a viscosity reduction of at least 20% of the cooked pulp and preferably at least 40% of the cooked pulp,
d) subjecting the oxygen delignified pulp for final bleaching in at least 2 bleaching stages obtaining a final dissolving pulp after the last bleaching stage.

4. Method according to claim 3 wherein the steps a) and b) takes place in a batch digester or a continuous digester.

5. Method according to claim 4 wherein the oxygen delignification takes place in at least 2 successive treatment vessels with at least one mixing position between said vessels, where at least one part of the charge of oxygen, alkali or peroxide is added to the mixing position between vessels.

6. Method according to claim 5 wherein the treatment liquid after step a) is replaced by new treatment liquid for step b), preferably by a displacement process, thus producing a displaced hydrolysate liquid from step a) containing dissolved hemicellulose.

7. Method according to claim 5 wherein the cooked cellulosic material is washed before the oxygen delignification stage, and that the cooked and washed cellulosic material is suspended in a new treatment liquid ahead of oxygen delignification.

8. Method according to claim 7 wherein the new treatment liquid ahead of oxygen delignification contains a COD content above 10 g per liter.

9. Method according to claim 1 wherein the conditions of the oxygen delignification stage are used as a primary control for the final viscosity of the dissolving pulp, enabling viscosity modifications in the range of 100-200 ml/g over the oxygen delignification stage.

## Patentansprüche

1. Verfahren zur Herstellung von Lösepulpe niedriger Viskosität aus lignocellulosehaltigem Material, wobei das Löseverfahren ein erstes saures Hydrolyseverfahren umfasst, gefolgt von einem Kraftkochverfahren, das eine Kappa-Zahl in der gewaschenen gekochten Pulpe unter 30 erreicht, wobei die gekochte und gewaschene Pulpe anschließend weiter in mindestens einer Sauerstoff-Delignifizierungsphase delignifiziert und schließlich in mindestens einer Bleichstufe gebleicht wird, und wobei die endgültige Zielviskosität der gebleichten Lösepulpe primär durch Einstellen der Bedingungen der Sauerstoffphase unter Verwendung von Temperatur, Alkaliladung und Sauerstoffladung reguliert wird, um eine Basisviskositätsreduzierung in der Sauerstoffphase im Bereich von 50-300 ml/g durch Einstellen der Temperatur und der Ladung von Alkali und Sauerstoff zu erhalten, wobei die Sauerstoffphase durch eine Charge von mindestens einem zusätzlichen Oxidationsmittel weiter verstärkt wird, um eine zusätzliche Viskositätsreduzierung in der Sauerstoffphase im Bereich von mindestens 50-100 ml/g zu erlangen.

2. Verfahren nach Anspruch 1, wobei das zusätzliche Oxidationsmittel Wasserstoffperoxid ist.

3. Verfahren nach Anspruch 2, wobei der Auflösungsprozess folgende Schritte in Reihenfolge umfasst;
a) Unterziehen von zerkleinertem Cellulosematerial einem sauren Hydrolyseverfahren, wobei mindestens 20 % des ursprünglichen Hemicellulosegehalts des Lignocellulosematerials im Hydrolyseverfahren abgebaut werden,
b) Unterziehen des hydrolysierten lignocellulosehaltigen Materials einem Kraftkochen, womit eine gekochte Pulpe erlangt wird,
c) Unterziehen der gekochten Pulpe einer Sauerstoff-Delignifizierung, wobei die Bedingungen der Sauerstoff-Delignifizierung wie folgt sind
c1) eine Verweilzeit von mindestens 40 Minuten, vorzugsweise 60 Minuten und höchstens 180 Minuten in der Sauerstoff-Delignifizierung;
c2) eine Anfangstemperatur, die gleich wie oder über 90 °C und höchstens 140° C ist;
c3) eine Alkaliladung gleich wie oder größer als 20 kg/odt, was in einem endgültigen pH-Wert von oder über 12,0 resultiert;
c4) wobei das Alkali in Form von Natriumhydroxid oder zumindest teilweise oxidierter weißer Lauge geladen wird, wobei mindestens mehr als 50 % der schwefelhaltigen Ionen in der weißen Lauge zu Thiosulfat oxidiert wurden;
c5) eine Gesamtsauerstoffbelastung von 20 kg/ODMT oder mehr;
c6) eine Peroxidladung gleich wie oder größer als 2 kg/BDMT, vorzugsweise 3 kg/odt und bevorzugter 6 kg/odt, und höchstens bis zu 10 kg/odt;
c7) einen Druck von mehr als 3 bar(g), der während der gesamten Sauerstoff-Delignifizierung aufgebaut wird, vorzugsweise zwischen 5-10 bar(g), und höchstens einen Druck von 15 bar(g);
c8) wobei die Bedingungen in einer Viskositätssenkung von mindestens 20 % der gekochten Pulpe und vorzugsweise von mindestens 40 % der gekochten Pulpe resultieren,
d) Unterziehen der sauerstoffdelignifizierten Pulpe einem Endbleichen in mindestens 2 Bleichstufen, womit nach der letzten Bleichstufe eine endgültige Auflösungspulpe erhalten wird.

4. Verfahren nach Anspruch 3, wobei die Schritte a) und b) in einem Chargen-Fermenter oder einem Durchlauf-Fermenter durchgeführt werden.

5. Verfahren nach Anspruch 4, wobei die Sauerstoff-Delignifizierung in mindestens 2 aufeinanderfolgenden Behandlungsbehältern mit mindestens einer Mischposition zwischen den Behältern erfolgt, wobei mindestens ein Teil der Ladung an Sauerstoff, Alkali oder Peroxid der Mischposition zwischen den Behältern hinzugefügt wird.

6. Verfahren nach Anspruch 5, wobei die Behandlungsflüssigkeit nach Schritt a) durch eine neue Behandlungsflüssigkeit für Schritt b) ersetzt wird, vorzugsweise durch ein Verdrängungsverfahren, wodurch eine verdrängte Hydrolysatflüssigkeit aus Schritt a) erzeugt wird, die gelöste Hemicellulose enthält.

7. Verfahren nach Anspruch 5, wobei das gekochte Cellulosematerial vor der Sauerstoff-Delignifizierungsphase gewaschen wird, und das gekochte und gewaschene Cellulosematerial vor der Sauerstoff-Delignifizierung in einer neuen Behandlungsflüssigkeit suspendiert wird.

8. Verfahren nach Anspruch 7, wobei die neue Behandlungsflüssigkeit vor der Sauerstoff-Delignifizierung einen COD-Gehalt von mehr als 10 g pro Liter enthält.

9. Verfahren nach Anspruch 1, wobei die Bedingungen der Sauerstoff-Delignifizierungsphase als primäre Steuerung für die endgültige Viskosität der Lösepulpe verwendet werden, wodurch Viskositätsänderungen im Bereich von 100-200 ml/g über die Sauerstoff-Delignifizierungsphase ermöglicht werden.

## Revendications

1. Méthode de production d'une pâte à dissoudre à faible viscosité à partir d'une matière lignocellulosique, ledit précédé de dissolution comprenant un premier procédé d'hydrolyse acide suivi par un procédé de cuisson kraft atteignant un indice de kappa dans la pâte cuite lavée inférieur à 30, ladite pâte cuite et lavée en outre délignifiée par la suite dans au moins une étape de délignification à l'oxygène et pour finir blanchie dans au moins une étape de blanchiment, et dans laquelle la viscosité cible finale de la pâte à dissoudre blanchie est principalement régulée en ajustant les conditions de l'étape d'oxygène en utilisant la température, la charge d'alcali et la charge d'oxygène obtenant une réduction de viscosité de base dans ladite étape d'oxygène dans la plage de 50 à 300 ml/g par ledit ajustement de la température et des charges d'alcali et d'oxygène, ladite étape d'oxygène étant en outre renforcée par une charge d'au moins un agent d'oxydation supplémentaire afin d'obtenir une réduction de viscosité supplémentaire dans ladite étape d'oxygène dans la plage d'au moins 50 à 100 ml/g supplémentaires.

2. Méthode selon la revendication 1 dans laquelle l'agent d'oxydation supplémentaire est le peroxyde d'hydrogène.

3. Méthode selon la revendication 2, ledit procédé de dissolution comprenant les étapes suivantes dans l'ordre :
a) le fait de soumettre une matière cellulosique concassée à un procédé d'hydrolyse acide dans laquelle au moins 20 % de la teneur initiale en hémicellulose de la matière lignocellulosique est dégradée dans le procédé d'hydrolyse,
b) le fait de soumettre la matière lignocellulosique hydrolysée à une cuisson kraft obtenant une pâte cuite,
c) le fait de soumettre la pâte cuite à une délignification à l'oxygène, dans laquelle les conditions de délignification à l'oxygène est comme suit
c1) un temps de rétention d'au moins 40 minutes, préférablement 60 minutes et au maximum 180 minutes dans ladite délignification à l'oxygène ;
c2) une température initiale déterminée comme étant supérieure ou égale à 90° C, et 140° C au maximum ;
c3) une charge d'alcali supérieure ou égale à 20 kg/odt (tonne séchée au four) avec pour résultat un pH final supérieur ou égal à 12,0 ;
c4) ledit alcali chargé sous la forme d'hydroxyde de sodium ou d'une liqueur blanche au moins partiellement oxydée où au moins plus de 50 % des ions contenant du soufre dans la liqueur blanche ont été oxydés en thiosulfate au minimum ;
c5) une charge d'oxygène totale supérieure ou égale à 20 kg/ODMT (tonne métrique séchée au four)
c6) une charge de peroxyde supérieure ou égale à 2 kg/BDMT (tonne métrique absolument sèche), de préférence 3 kg/odt et plus préférablement 6 kg/odt, et jusqu'à 10 kg/odt au maximum ;
c7) une pression dépassant 3 barg déterminée pendant toute la délignification à l'oxygène, préférablement entre 5 à 10 barg, et au maximum une pression de 15 barg ;
c8) lesdites conditions ayant pour résultat une réduction de viscosité d'au moins 20 % de la pâte cuite et préférablement d'au moins 40 % de la pâte cuite,
d) le fait de soumettre la pâte délignifiée à l'oxygène pour le blanchiment final dans au moins 2 étapes de blanchiment obtenant une pâte à dissoudre finale après la dernière étape de blanchiment.

4. Méthode selon la revendication 3 dans laquelle les étapes a) et b) ont lieu dans un digesteur en discontinu ou en continu.

5. Méthode selon la revendication 4 dans laquelle la délignification à l'oxygène a lieu dans au moins deux cuves de traitement successives avec au moins une position de mélange entre lesdites cuves, où au moins une partie de la charge d'oxygène, d'alcali ou de peroxyde est ajoutée à la position de mélange entre les cuves.

6. Méthode selon la revendication 5 dans laquelle le liquide de traitement après l'étape a) est remplacé par du nouveau liquide de traitement pour l'étape b), préférablement par un procédé de déplacement, produisant ainsi un liquide d'hydrolysat déplacé de l'étape a) contenant de l'hémicellulose dissoute.

7. Méthode selon la revendication 5 dans laquelle la matière cellulosique cuite est lavée avant l'étape de délignification à l'oxygène, et la matière cellulosique cuite et lavée est mise en suspension dans un nouveau liquide de traitement avant la délignification à l'oxygène.

8. Méthode selon la revendication 7 dans laquelle le nouveau liquide de traitement avant la délignification à l'oxygène contient une demande chimique en oxygène supérieure à 10 g par litre.

9. Méthode selon la revendication 1 dans laquelle les conditions de l'étape de délignification à l'oxygène sont utilisées comme une régulation primaire pour la viscosité finale de la pâte à dissoudre, permettant des modifications de la viscosité dans la plage de 100 à 200 ml/g au cours de l'étape de délignification à l'oxygène.
